**Europäisches Patentamt**

**European Patent Office**

**Office européen des brevets**

(19)

(11) Veröffentlichungsnummer: **0 241 090 B1**

(12) ## EUROPÄISCHE PATENTSCHRIFT

(45) Veröffentlichungstag der Patentschrift: **04.12.91**

(51) Int. Cl.⁵: **C02F 1/48**

(21) Anmeldenummer: **87200601.0**

(22) Anmeldetag: **01.04.87**

(54) **Magnetohydrodynamisches Verfahren zur Wasseraufbereitung.**

(30) Priorität: **07.04.86 PL 258848**

(43) Veröffentlichungstag der Anmeldung:
**14.10.87 Patentblatt 87/42**

(45) Bekanntmachung des Hinweises auf die
Patenterteilung:
**04.12.91 Patentblatt 91/49**

(84) Benannte Vertragsstaaten:
**BE DE FR GB IT SE**

(56) Entgegenhaltungen:
**DE-A- 3 433 417**
**GB-A- 1 363 294**

(73) Patentinhaber: **Instytut Fizyki Jadrowej w Krakowie**
**Radzikowskiego Str. 152**
**Krakow(PL)**

Patentinhaber: **Zaklady Pomiarowo-Badawcze**
**Energetyki Energopomiar**
**Gen. J. Sowinskiego Strasse 3**
**Gliwice(PL)**

(72) Erfinder: **Szkatula, Antoni, Dr.**
**Smoluchowskiego Str. 8/6**
**Krakow(PL)**

Erfinder: **Ratajczyk, Tadeusz**
**Nawojki Str. 6-8/123**
**Krakow(PL)**
Erfinder: **Hodorowicz, Stanislaw, Dr.**
**Slomaina Str. 4/44**
**Krakow(PL)**
Erfinder: **Biel, Stanlislaw, Dipl.-Masch.-Ing.**
**Krowoderska Str. 29/8**
**Krak w(PL)**
Erfinder: **Bania, Andrzej, Dipl.-Chem.-Ing.**
**Sobieskiego Str. 10/12**
**Zabrze(PL)**
Erfinder: **Maciejewski, Henryk, Dipl.-Chem.**
**Wojska Polskiego Str. 11**
**Myslowice(PL)**

(74) Vertreter: **Noz, Franciscus Xaverius, Ir. et al**
**Algemeen Octrooibureau P.O. Box 645**
**NL-5600 AP Eindhoven(NL)**

## Beschreibung

Der Gegenstand der Erfindung ist ein magnetohydrodynamisches Verfahren zur Wasseraufbereitung für Industrie-, Bau- und Zuchtzwecke. Dieses Verfahren, dem eine einfache nichtchemische und keine Umweltverunreinigung verursachende Methode zugrunde liegt, verursacht Inkrustations- und Korrosionsverminderung in den Industrieanlagen, Wasserreinigung und beschleunigte Salzlösung.

Das aus der polnischen Patentbeschreibung Nr 47 507 bekannte Verfahren zur Behandlung von niederschlägebildenden, korrodierenden und ähnlichen Flüssigkeiten besteht darin, dass die Flüssigkeit durch eine, von zwei anliegenden Dauermagnetpolen und mindestens einem zusätzlichen, zwischen den genannten Dauermagneten angeordneten, paramagnetischen Körper beschränkte Verengung geleitet wird.

Das aus der polnischen Patentbeschreibung Nr 56 679 bekannte Verfahren zur Entfernung aus Wasser und Abwasser der eisen- und eisenverbindungenhaltigen magnetisch wirksamen Suspensionen besteht darin, dass Wasser oder Abwasser ununterbrochen durch das Magnetfeld geleitet wird um die einzelnen Suspensionteilchen zu magnetisieren, welche sich dadurch zu den leichtsinkenden Suspensionaglomeraten verbinden, die dann von dem Wasser oder Abwasser in bekannten Absetzbecken abgetrennt werden.

Das aus der polnischen Patentbeschreibung Nr 62 737 bekannte Verfahren zur Wasserentmineralisierung durch die physikochemischen Verfahren besteht darin, dass das Wasser durch einen Kaskadenelektrolyseur geleitet wird, wo eine Koagulation der Verunreinigungen erfolgt, und dann das Wasser mit der Suspension der koagulierten Mineralsalze und Kolloiden durch einen Rohrkern der Induktionsspule in der Magnetfeldkraftrichtung bis zum Verteilungsraum geleitet wird, wo es, um die Endtrennung zu erzielen, in den Unterteil des Raumes ins Magnetdrehfeld gerichtet wird, woher die Verunreinigung mit Wasseranteil nach aussen abgeleitet wird. Mit einer anderen Mündung wird aus dem Verteilungsraum gereinigtes Wasser abgeleitet und das ganze Verfahren wird ununterbrochen durchgeführt.

Es ist auch aus der polnischen Patentbeschreibung Nr 133 778 ein Verfahren zur Aufbereitung von Rohwasser in einer Wirtschaftswarmwasseranlage bekannt, welches darin besteht, dass der Rohwasserstrahl einem Beschleunigungsfelde pendelartig so unterliegt, dass die Verzögerungen und Beschleunigungen abwechseln. Während der Beschleunigung und Verzögerung des Wasserstrahles erfolgt eine Abgabe des Sauerstoffs und des freien Kohlendioxides aus dem Wasser sowie die Abscheidung von Salzen anderer Elemente. Die Abgabe des Sauerstoffs aus dem Wasser wird von einer Oxidation der in Wasser gelösten Eisenverbindungen begleitet.

Es ist ausserdem aus der polnischen Patentbeschreibung Nr 138 828 ein Verfahren zur Wasseraufbereitung in einer inneren Zentralheizungsanlage bekannt, welches darin besteht, dass die aus der Wasserversorgungsanlage entnommenen Wasserteilchen den unelastischen Stössen mit den Festkörperteilchen in der Wirbelschicht unterliegen, worin das Wasser ein Arbeitsstoff und Quarzsand-Marmorkiesmischung ein Festkörper ist.

Das Stossverfahren in Anwesenheit des Magnetfeldes regt die Abscheidung der Salze an. Die Sandkörner wirken als Kristallisationskerne der für die Wasserhärte eintscheidenden Salze. Diese Salze bedecken die Sandkörner nehmen eine Granülenform an. Kleine Leistung, Notwendigkeit der Anwendung von komplizierten Anlagen und enger Anwendungsbereich sind die Nachteile der obengenannten Verfahren.

Das Verfahrenwesen besteht dem Patent gemäss darin, dass Ionsiliziumdioxid oder Kieselsäure in der Menge von 5 bis 100 g/m$^3$ des Wassers, Magneteisenerz in der Menge von 0,5 bis 1,0g bei der Strömung von 1m$^3$ des Wassers pro Stunde und gelöste Salze enthaltendes Wasser mit einer Geschwindigkeit von 0,67 bis 2,72 m/s und einem Geschwindigkeitsgradient von 50 bis 200 1/s durch den Bereich mit einer Magnetfeldstärke von $0,4 \times 10^5$ bis $1,6 \times 10^5$ A/m und einem Magnetfeldgradient von $0,5 \times 10^7$ bis $2,2 \times 10^7$ A/m$^2$ geleitet wird, wordurch im Wasser Kieselsäurepolymere entstehen.

Unter dem Einfluss des magnetohydrodynamischen Verfahrens und des Magneteisenerzes als im Magnetfeld wirkenden Katalysatores regt das Verfahren der Polikondesation des Siliziumdioxides an, das heisst, die Bildung im Naturwasser von Kieselsäurepolymeren verschiedener Form und Struktur - linearen, verzweigten und räumlichen. Die lineraren und verzweigten Polymere wirken als die eine Beschleunigung der Reinigung des suspensionenthaltenden Wassers bewirkenden Koagulante und Flockungsmittel, welche auch die in diesem Wasser auftretende Vorgänge, wie Salzlösung, Oberflächenreinigung u.ä., modifizieren. Die Raumpolymere, das heisst aktive Silikatsole mit sehr kleinen Körnern treten in Form der Kolloidsuspension mit hochentwickelter Oberfläche auf. Sie kennzeichnen sich durch Sorptions-und katalitische Eigenschaften. Die Silikatsole bilden mit Kationen und im Wasser auftretenden organischen Substanzen Hydrosole. Diese Kationen sind Ionen folgender Elemente - Ca,Mg,Fe,Zn.Cu,Mn, u.ä. Die Ionen von Fe,Cu,Zn, Mn, und organische Substanzen werden mit linearem Kieselsäurepolymer koaguliert und fallen aus dem Wasser in Form der Hydroxide, was eine partielle Wasserreinigung bewirkt. Die räumlichen Kieselsäurepolymere nehmen vor allem Ionen von Ca,Mg in Form der Hydroxide an und bilden die Silikat--Kalzium-Magnesiumhydrosole. In so aufbereitetem Wasser wird eine Karbonatkristallisation sowie auf den Wänden von Rohren und Anlagen, durch welche Wasser strömt, als auch unmittelbar im Wasser erschwert. Das aus der Kalzium- und Magnesiumkarbonaten im Wasser bleibende Kohlendioxid erhöht die Karbonatstabilität des Wassers. Gleiche Erscheinung kommt für die Sulfate vor. Eine dünne Niederschlagschicht in Form der Sole, die sich unter dem Zeit- und Temperatureinfluss in die Silikat-Kalzium-Magnesiumhydrosole unwandelt, schützt die Metallflächen der Rohren und Anlagen gegen Rost und stetige Kristallisation von Karbonaten in Form des Kesselsteins. Karbonatkörner, die jedoch entstehen und in die Niederschlagschicht fallen, werden in die Kieselsäure-Kalzium-Magnesiumhydrogele umgewandelt. In so aufbereitetem, eine Kolloidsuspension der Kieselsäurehydrosole enthaltendem Wasser kommt eine Lösung von Altniederschlägen vor. Demgegenüber haben die Spurmengen der sich aus solchem Wasser abscheidenden Niederschläge Form der leicht mit Wasser herausspülbaren Schlämme. Die durch das Dauerbleiben auf den Flächen mit erhöhter Temperatur verursachte Koagulation der Hydrosole auf die Hydrogele ist ungefährlich in Hinsicht darauf, dass die Hydrogele ungefähr 50 Waageprozente $Ca(OH)_2$ und $Mg(OH)_2$ enthalten, die leicht mit schwacher Salzsäure herausspülbar sind.

Unerwartet wurde festgestellt, dass das Verfahren laut der Erfindung erlaubt in den die Ionsilikate oder Kieselsäuren enthaltenden Wässern mittels des magnetohydrodynamischen Verfahrens Kieselsäurepolymere darzustellen, die die fläche-aktive Koagulations-, Sorptions- und katalitischen Eigenschaften besitzen. Die Einfachheit des Verfahrens laut der Erfindung, das keine Umweltverunreinigung verursacht, ist ein Vorzug der Lösung. Die aufdiese Weise erhalteten Silikatsole sind sehr aktiv in Hinsicht auf Sorption. Aus der durchgeführten chemischen Analyse ergibt sich, dass bei einer $SiO_2$-Konzentration von 25% in Silikat-Kalzium-Magnesiumhydrosolen die CaO- und MgO-Konzentration beträgt ungefähr 35%. Bis jetzt sind die Sorbense mit solcher Sorptionskapazität nicht dargestellt worden.

Die Lösung laut der Erfindung wird in Anwendungsbeispielen erklärt.

Beispiel I

Das Seewasser, das das Ionsiliziumdioxid /Kieselsäure/ in der Menge von 10 g/m³ des Wassers, Magneteisenerz in der Menge von 0,5 g/m³ des strömenden Wassers pro Stunde und gelöste Salze enthielt, wurde 13 mal mit einer Geschwindigkeit von 1,0 m/s durchschnittlich und einem Geschwindigkeitsgradient von 50 1/s durch den Bereich mit einer Magnetfeldstärke von $1,2 \times 10^5$ A/m und einem Magnetfeldgradient von $0,7 \times 10^7$ A/m² geleitet. Unter dem Einfluss des magnetohydrodynamischen Verfahrens und des Magneteisenerzes als des im Magnetfeld wirkenden Katalysators erfolgte ein Uebergang des Ionsiliziumdioxides in die Kieselsäure und der Anfang der Polymerisation der Kieselsäure in die linearen und räumlichen Polymere. In Rohren der Versuchschleife, wo so aufbereitetes und nichtaufbereitetes Wasser auf gleiche Weise erwärmt wurde, wurde festgestellt, das sich aus dem kalten nichtaufbereiteten Wasser kein Niederschlag abscheidet, aber dass es sich aus dem aufbereiteten Wasser abscheidet. Das wird auf dem Bild 1 dargestellt, wobei an der Y-Achse die Nummer der ein Meter langen Rohrabschnitte einer Versuchschleife und an der X-Achse die Mengen in Gramm des in diesen ein Meter langen Abschnitten erzeugten Niederschlags markiert werden. Die Menge des den Rohren, durch welche aufbereitetes Wasser strömte, entnommenen Niederschlags wird mit Kreischen markiert. Der Massstab wird rechts der X-Achse markiert. Die Menge des Niederschlags war im Durchschnitt auf dem Niveau von 0,5. Die Menge des den Rohren, durch welche das nichtaufbereiteten Wasser strömte, entnommenen Niederschlags wird mit Dreiekken markiert; der Massstab wird links der X-Achse markiert. Die ausgezogene Linie zeigt, wie sich die Wassertemperatur in den Rohren ändert.

Die im magnetohydrodynamischen Verfahren zur Wasseraufbereitung dargestellten Kieselsäurepolymere haben eine Koagulation und Abscheidung der Suspension, das heisst der organischen Substanzen, Eisen-, Mangan-, Kupfer-, Zinkverbindungen u.ä. verursacht. In Rohren, in denen nichtaufbereitetes Wasser strömte, wurde kein Niederschlag festgestellt, aber in Rohren, in denen aufbereitetes Wasser strömte, die Niederschlagsmenge war konstant und hing von der Wassertemperatur nicht ab. Die Menge des aus dem nichtaufbereiteten Wasser entstehenden Niederschlags als eine Wassertemperaturfunktion hatte einen Aktivierungscharakter. So dargestellte Niederschläge unterschieden sich in jeder Hinsicht. Die in der aus dem Wasser bei weiterer Erwärmung abgeschiedenen Niederschlagsmengen beobachtete Unterschiede sind ein Ergebnis der im aufbereiteten Wasser dargestellten Silikatsole und deren Fehlen im nichtaufbereiteten Wasser.

Beispiel II

Das Grubenwasser, das das Ionsiliziumdioxid /Kieselsäure/ in der Menge von 10 g/m³ des Wassers, Magneteisenerz in der Menge von 1,0 g/m³ des strömenden Wassers pro Stunde und gelöste Salze enthält, wurde 5 mal mit einer mittleren Geschwindigkeit von 1,5 m/s und mit einem Geschwindigkeitsgradient von 150 1/s durch den Bereich mit einer Magnetfeldstärke von $1,2 \times 10^5$ A/m und einem Magnetfeldgradient von $1,1 \times 10^7$ A/m² geleitet. Unter dem Einfluss des magnetohydrodynamischen Verfahrens und des Magneteisenerzes als im Magnetfeld wirkenden Katalysators erfolgte ein Uebergang des Ionsiliziumdioxides in die Kieselsäure und der Anfang der Polymerisation der Kieselsäure in die linearen und räumlichen Polymere. Die räumlichen Polymerer der Kieselsäure - die Silikatsole haben, mit den Kalzium- und Magnesiumkationen, die Hydrosole in Form der Kolloidsuspension mit einer Amorphstruktur, die die Sorption- und katalitischen Eigenschaften besitzt, dargestellt. Es wurde eine 5 - 10 malige Abnahme der Menge der aus dem Wasser abscheidenden Niederschläge beobachtet. In Hinsicht auf chemische Zusammensetzung die Restniederschläge sind die Silikat-Kalzium-Magnesiumhydrosole in Form der leicht mit Wasser herausspülbaren Schlämme. Die chemische Zusammensetzung der aus dem aufbereiteten Wasser erhaltenen Niederschläge stellt sich folgenderweise vor: Kationen: $CaO$-30,96%,$MgO$-4,68%,$Fe_2O_3$-1,23%,$FeO$-    , $Mn_3O_4$-0,06%,$ZnO$-0,25%,$Cu$-0,07%,$Na_2O$-0,21%,$K_2O$-O, 10%,$Al_2O_3$-0,56%; Anionen: $CO_2$-1%,$SiO_2$-24,8%,$SO_3$-0,70%,$P_2O_5$-0,95%,$NaCl$-    , $NaOH$- ; insgesamt 99,40%.

Der Röstverlust in 800° C betrug 34,83%, darin 18,7% der Feuchte.

Auf dem Bild 2 werden die auf dem Spektrometer mit Fourieranalyse "Digilab" FTS-14 gemessene Absorptionsspektra für Infrarot dargestellt. Die Kurve 1 bestimmt das Spektrum eines Niederschlags, das aus dem nichtaufbereiten Wasser entstand /Kalzit ist die Hauptkomponente des Niederschlags/; die Kurve 2, entsprechend - das Sprektum des Niederschlags, der aus dem mit dem magnetohydrodynamischen Verfahren aufbereiteten Wasser entstand /Silikat-Kalzium-Magnesiumhydrosole sind die Hauptkomponente des Niederschlags, Kalzit tritt nur in ca.3% auf/; die Kurve 3, entsprechend - das Spektrum des Niederschlags, das aus dem mit dem magnetohydrodynamischen Verfahren aufbereiteten Wasser nach der Spülung mit der 5%-Salzsäuerlösung entstand/ typisches Silikatgelsspektrum/. Weitere Bestimmungen sind: K-Kalzitabsorptionsbänder, HZ-Absorptionsbänder für Silikat-Kalziumhydrosole, $H_2O$-Wasserabsorptionsband. Obwohl es in der Umrechnung auf die Oxide ca.35 Waageprozenten von Kalzium und Magnesium im Niederschlag gibt, wurden in diesem Niederschlag nur Spurmengen von Kohlendioxid festgestellt. Kalzium und Magnesium treten in diesem Niederschlag in Form der Hydroxide auf, und nicht in Form der Karbonaten mit einer Kalzitstruktur, wie es im üblichen Kesselstein vorkommt.

Beispiel III

Das Grubenwasser, das das Ionsiliziumdioxid /Kieselsäure/ in der Menge von 10 g/m³ des Wassers, Magneteisenerz in der Menge von 1 g/m³ des strömenden Wassers pro Stunde und gelöste Salze enthält, wurde 5 mal mit einer mittleren Geschwindigkeit von 1,5 m/s und mit einem Geschwindigkeitsgradient von 150 1/s durch den Bereich mit einer Magnetfeldstärke von $1,2 \times 10^5$ A/m und einem Magnetfeldgradient von $1,1 \times 10^7$ A/m² geleitet Unter dem Einfluss des magnetohydrodynamischen Verfahrens und des Magneteisenerzes als des im Magnetfeld wirkenden Katalysators erfolgte ein Uebergang des Ionsiliziumdioxides in die Kieselsäure und der Anfang der Polymerisation der Kieselsäure in die linearen und räumlichen Polymere. Nach Ablauf ungefähr eines Jahres von der Verfahrensanwendung an laut der Erfindung in der Wasseraufbereitung im Kraftwerk wurde in den Kaminkühlern eine Stalaktitenlösung beobachtet. In dieser Zeitdauer wurde 5 - 10 malige Abnahme der sich in den Wärmeäuschern abscheidenden Niederschlagsmengen beobachtet. Die Konzentration der Silikat-Kalzium-Magnesiumhydrosole im aus dem Umlaufwasser mittels einer Filtration erhaltenen Niederschlag war relativ gross.

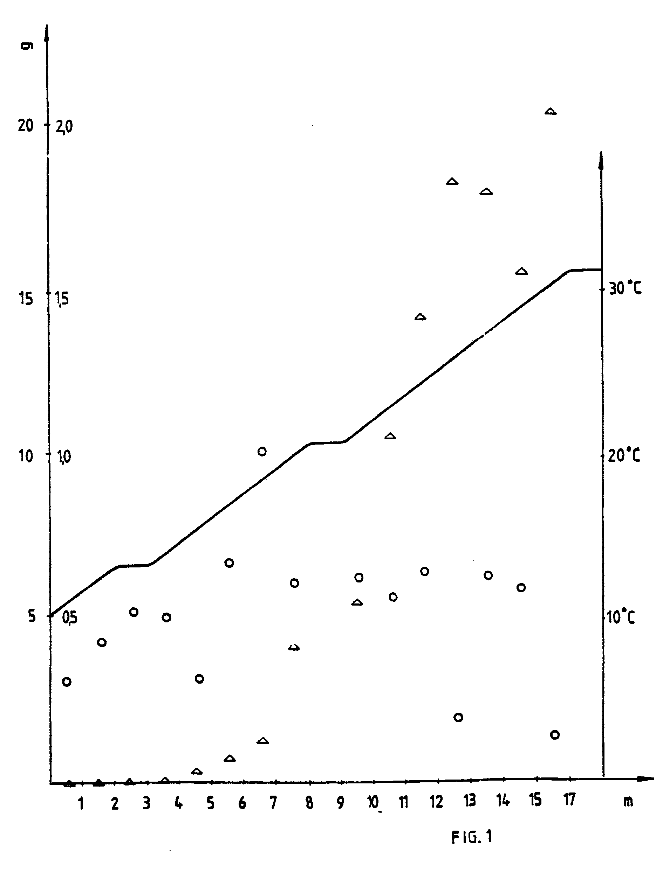

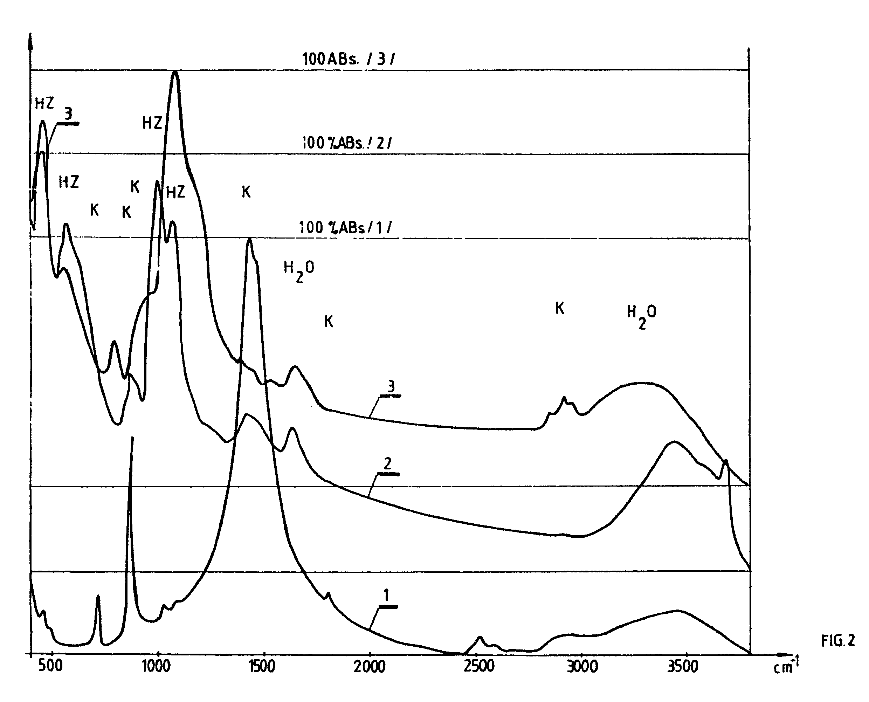

**Patentansprüche**

1. Magnetohydrodynamisches Verfahren zur Wasseraufbereitung, dadurch gekennzeichnet, dass ionenbildendes Siliziumdioxid oder Kieselsäure in der Menge von 5 bis 100 g/m³ des Wassers, Magneteisenerz in der Menge von 0,5 bis 1,0g bei einer Strömung von 1m³ des Wassers pro Stunde und gelöste Salze enthaltenden Wasser mit einer Geschwindigkeit von 0,67 bis 2,72 m/s und einem Geschwindigkeitsgradient von 50 bis 200 1/s durch den Bereich mit einer Magnetfeldstärke von $0,4 \times 10^5$ bis $1,6 \times 10^5$ A/m und einem Magnetfeldgradient von $0,5 \times 10^7$ bis $2,2 \times 10^7$ A/m² geleitet wird.

2. Verfahren nach Anspruch 1, dadurch gekennzeichnet, dass infolge des magnetohydrodynamischen Verfahrens in Wasser Kieselsäurepolymere entstehen.

3. Verfahren nach den Ansprüchen 1 und 2, dadurch gekennzeichnet, dass in der Anwendung für die Reinigung des Wassers von Suspension die in Wasser entstandenen, Flockungs- und Koagulationseigenschaften aufweisenden linearen und räumlichen Kieselsäurepolymere ausgenutzt werden.

4. Verfahren nach den Ansprüchen 1 und 2, dadurch gekennzeichnet, dass in der Anwendung für die Verhinderung der Entstehung der Karbonat- und Sulfatniederschläge und für die Lösung von Altniederschlägen die Sorptionseigenschaften der räumlichen Kieselsäurepolymere - der Silikatsole ausgenutzt werden, welche die Kalzium- und Magnesiumionen in Form von Hydroxiden in Sole einbauend, das das Wasser stabilisierende Kohlendioxid lassen.

5. Verfahren nach den Ansprüchen 1 und 2, dadurch gekennzeichnet, dass in der Anwendung für die Verbesserung des Arbeitswirkungsgrades der Ionenaustauschersäulen die durch die Anwesenheit von linearen Kieselsäurepolymeren gesenkte Oberflächenspannung sowie die Anwesenheit von Silikat-Kalzium-Magnesiumhydrosolen, die leicht in Ionenaustauschersäulen gefiltert werden und gleichzeitig als Sorbense wirken, ausgenutzt werden.

6. Verfahren nach den Ansprüchen 1 und 2, dadurch gekennzeichnet, dass in der Anwendung für den Rostschutz von Rohren und Anlagen die Bedeckung der Metallflächen mit einer Schicht von Silikat-Kalzium-Magnesiumhydrosolen ausgenutzt wird.

7. Verfahren nach den Ansprüchen 1 und 2, dadurch gekennzeichnet, dass in der Anwendung für die Lösung der Salze und deren Herausspülen aus dem Erdboden die durch die Anwesenheit der linearen Kieselsäurepolymere gesenkte Oberflächenspannung ausgenutzt wird.

8. Verfahren nach den Ansprüchen 1 und 2, dadurch gekennzeichnet, dass in der Anwendung für die Intensivierung von Pflanzen- und Zuchterzeugung die durch die Anwesenheit der linearen Kieselsäurepolymere gesenkte Oberflächenspannung, welche ein besseres Herausspülen der Nahrungsbestandteile und ihre leichtere Diffusion mit Wasser verursacht, sowie die Anwesenheit der räumlichen Silikat-Kalzium-Magnesiumsole mit leichtaufnahmefähigen Kalzium- und Magnesiumhydroxiden ausgenutzt werden.

9. Verfahren nach den Ansprüchen 1 und 2, dadurch gekennzeichnet, dass in der Anwendung für die Reinigung des Wassers von Schwermetallen und radioaktiven Verunreinigungen die dargestellten Silikat-Kalzium-Magnesiumsole - gele in Form der Niederschlägen ausgenutzt werden, welche als Sorbense und Ionenaustauscher angewandt werden.

**Claims**

1. Magnetohydrodynamic method for water treatment, characterized by the fact that the water containing the ionic silica or silicic acid in the quantity of 5 to 100 $g/m^3$ of water, the magnetite in the quantity of 0.5 to 1.0 g at the water flow of 1 $m^3$ per hour, and water containing dissolved salts are passed at the speed of 0.67 to 2.72 m/s and with the speed gradient of 50 to 200 1/s through the areas having the magnetic field intensity from $0.4 \times 10^5$ to $1.6 \times 10^5$ A/m and with the magnetic field gradient from $0.5 \times 10^7$ to $2.2 \times 10^7$ $A/m^2$.

2. Method according to claim 1, characterized by the fact that as a result of the magnetohydrodynamic process silicic acid polymers in water are formed.

3. Method according to claims 1 and 2, characterized by the fact that for water purification from a suspension one uses the linear and branched silicic acid polymers showing floculating and coagulating properties formed in water.

4. Method according to claims 1 and 2, characterized by the fact that for inhibiting the formation of the carbonate and sulphate deposits and dissolving of old deposits one makes use of the sorption properties of the branched silicic acid polymers-silicate sols taking up the calcium and magnesium ions in the form of the hydroxides into the sols, leaving in water the stabilizing carbon dioxide.

5. Method according to claims 1 and 2, characterized by the fact that for improvement of the efficiency of ionic exchange columns one uses the reduced surface tension which is caused by the presence of the linear polymers of the silicic acid as well as the presence of the silicate-calcium-magnesium hydrosols which are easily filterred in the ionic exchange columns acting at the same time as sorbents.

6. Method according to claims 1 and 2, characterized by the fact that for anti-corrosion protection of pipes and equipment one uses coating metal surfaces with the layer of silicate-calcium-magnesium hydrosols.

7. Method according to claims 1 and 2, characterized by the fact that for dissolving of salts and removing by washing from the soil, one uses the reduced surface tension resulting from the presence of the linear polymers of silicic acid.

8. Method according to claims 1 and 2, characterized by the fact that for intensifying the cultivation of plants and animals, one uses the reduced surface tension resulting from the presence of the linear polymers of silicic acid causing better removal of the nutrients and their easier diffusion with water as well as the presence of the branched silicon-calcium-magnesium sols with easily absorbing calcium and magnesium hydroxides.

9. Method according to claims 1 and 2, characterized by the fact that for the removal of water heavy metals and radioactive contaminations from water one uses the produced sols - silicate-calcium-magnesium-gels in the form of deposits which are used as sorbents and ion exchangers.

## Revendications

1. Procédé magnétohydrodynamique de traitement de l'eau, caractérisé en ce que l'eau contenant la silice ionique ou l'acide silicique en quantite de 5 à 100 g/m³, la magnètitie en quantité de 0,5 à 1,0 g à l'ècoulement de 1 m³ à l'heure et les sels dissoutes dans l'eau est passé à une vitesse de 0,67 à 2,72 m/s et avec un gradient de vitesse de 50 à 200 1/s par une zone à l'intensité de champ mangétique de $0,4 \times 10^5$ à $1,6 \times 10^5$ A/m et au gradient de champ magnétique de $0,5 \times 10^7$ à $2,2 \times 10^7$ A/m².

2. Procédé selon la revendication 1, caractérisé en ce qu'à la suite de procédé magnétohydrodynamique, les polymères d'acide silicique se forment dans l'eau.

3. Procédé selon les revendications 1 et 2, caractérisé en ce que pour l'épuration de l'eau de la suspension on utilise les polymères d'acide silicique, linéaires et ramifiés, formés dan l'eau qui montrent les qualités floculantes et coagulantes.

4. Procédé selon les revendications 1 et 2, caractérisé en ce que pour la prévention la forma

tion de dépots de carbonates et de sulfates ainsi que la dissolution de dépots existants, on utilise les qualités de sorption des polymères réticulés d'acide silicique - des sols siliciques qui lient les ions de calcium et de magnésium sous la forme des hydroxydes aux sols et laissent le dioxyde de carbon dans l'eau en la stabilisant.

5. Procédé selon les revendications 1 et 2, caractérisé en ce que pour améliorer l'efficacité des collonnes d'échangeurs d'ions, on utilise la tension superficielle réduite par la présence des polymères linéaires d'acide silicique et la présence des hydrodols de silicatescalciummagnésium faciles à filtrer dans une colonne d'échangeurs d'ions et agissant en même temps en qualité de sorbents.

6. Procédé selon les revendications 1 et 2, caractérisé en ce que pour la protection anti-corrosion de tuyaux et d'installations on utilise le revêtement de la surface métallique d'une couche d'hydrosols de silicates-calcium-magnésium.

7. Procédé selon les revendications 1 et 2, caractérisé en ce que pour la dissolution de sels et à leur èlution du sol on utilise la tension superficielle réduite par la présence des polymères linéaires d'acide silicique.

8. Procédé selon les revendications 1 et 2, caractérisé en ce que pour l'intensification de la culture des plantes et de l'élévage d'animeaux on utilise la tension superficielle réduite par la présence des polymères linéaires d'acide silicique améliorant l'élution de composants alimentaires et facilitant leur diffusion à l'eau ainsi que la présence des sols réticulés de silicates-calcium-magnésium avec des hydroxydes de calcium et ceux de magnésium, faciles à assimiler.

9. Procédé selon les revendications 1 et 2, caractérisé en ce que pour l'épuration de l'eau de metaux lourds et des contaminations radioactives on utilise les sols-gels de silicatescalcium-magnésium sous la forme des sédiments utilisés en qualité de sorbents et d'échangeurs d'ions.

FIG. 1

FIG.2